# EUROPEAN PATENT SPECIFICATION

(11) **EP 3 097 004 B1**
(45) Date of publication and mention of the grant of the patent: **18.10.2017**
(21) Application number: 14701709.9
(22) Date of filing: 22.01.2014
(51) Int. Cl.: B62J 15/00, B62J 15/04

(54) **SPLASH GUARD**
SPRITZSCHUTZ
PARE-BOUE

(43) Date of publication of application: 30.11.2016
(73) Proprietor: Ass Savers AB, 411 04 Göteborg (SE)
(72) Inventor: DANIELSON, Petter, S-414 62 Göteborg (SE)
(74) Representative: Valea AB
(86) International application number: PCT/EP2014/051198
(87) International publication number: WO 2015/036127

(56) References cited:
- US-A- 5 868 411
- US-A- 5 918 904
- US-A1- 2010 140 896

## Description

### TECHNICAL FIELD

The present disclosure relates to a self-supporting rear splash guard for a bicycle. The disclosure further relates to a method for mounting a splash guard to a seat arrangement of a bicycle.

### BACKGROUND

When using a bicycle on a road, bike path or in the terrain, dirt, mud and/or water from the ground may be thrown up from a rear tyre of the bicycle. Therefore, most standard bicycles have fixedly mounted fenders or mud guards around a portion of the tyre to reduce, or preferably to avoid, dirt, mud and/or water from reaching the user of the bicycle, e.g. his or her back.

However, some bicycles, typically sport bicycles, do not have such fenders. The reason may be to save weight and/or to improve aerodynamics. This may not cause any problems, when using the bicycle in good weather conditions. However, the user of the bicycle may get quite dirty and/or wet if there is dirt, mud and/or water present on the ground, which is thrown up by the rear tyre.

Document US 2003/0155736 discloses a rear splash guard for bicycles. It comprises a flat sheet of resilient material in finished form, which may be attached to a bicycle seat arrangement. The bicycle saddle or saddle support system will then hold the splash guard in tension behind the seat post, such that is given a three-dimensional shape.

Document US 5 868 411 A discloses a splash guard for a bicycle, which is provided to defect tangential spray from the rear wheel of a bicycle. It emanates from the underside of the seat, being cantilevered over the rear wheel. The splash guard is attached by way of its design to the underside of the seat, being held in place by a forward tongue section and a middle section containing notches which attach to the metal seat rail supports. No metal fasteners are needed to attach and detach the splash guard. The splash guard is comprised of any available thermoplastic or thermosetting materials which can be formed, shaped, or fabricated by conventional means. These materials may contain additives such as colorants, reinforcing aides, stabilizers, and other compounding aides and fillers.

### SUMMARY

The object of the present disclosure is to overcome or ameliorate at least one of the disadvantages of the prior art, or to provide a useful alternative.

It is desirable to provide a self-supporting rear splash guard for a bicycle.

It is further desirable that the splash guard has a light weight.

It also desirable to provide a splash guard which is easy to mount and/or dismount from the seat arrangement. In particular, it is desirable to provide a splash guard which may be mounted or dismounted without the use of any tools.

In addition, it is desirable that the splash guard keeps its desired position when mounted, such that it does not become inclined or sloped or even falls off.

The object above may be achieved by the subject-matter of claim 1 and claim 15. Embodiments are set forth in the appended dependent claims, in the following description and in the drawings.

Thus, in a first aspect of the present invention there is provided a self-supporting rear splash guard for a bicycle. The bicycle has a seat arrangement comprising a seat, a support system and a seat post, wherein the seat is connectable to the seat post by means of the support system. The splash guard has a longitudinal direction and a transverse direction and comprises a front portion, a central portion and a rear portion. The front portion of the splash guard is adapted to extend over the seat post, when the splash guard is mounted in the seat arrangement. The front portion of the splash guard is adapted to engage with the support system in front of the seat post, when the splash guard is mounted in the seat arrangement.

The term splash guard for a bicycle includes splash guards for bicycle-like vehicles, i.e. vehicles being similar to a bicycle. In particular such vehicles have a seat arrangement similar to that of a bicycle and a rear tyre, located behind the seat arrangement, which tyre may potentially throw dirt, mud and/or water present on the ground onto the user of the vehicle. Such vehicles include an e-bike, or electric bicycle, i.e. a bicycle comprising electric motor which can be used for propulsion, and a moped. The motor may be electric or driven by liquid or gaseous fuel and may be used as an alternative to, or in combination with, pedals.

The support system of the seat arrangement may comprise one or more seat rails, e.g. a first seat rail at a left-hand side of the seat and a second seat rail at a right-hand side of the seat.

The seat post may comprise a cylindrical or tubular structure allowing height adjustment of the seat in relation to a frame of the bicycle. The seat post may further comprise an attachment unit for attachment of the seat to the seat post via the support system, e.g. by attachment of the seat rails to the attachment unit. The seat may be adjusted in the longitudinal direction relative to the seat post by selecting which portion of the seat rails is attached to the attachment unit. The seat rails may e.g. be slid through the attachment unit in order to reach the desired position. The attachment unit may comprise a lower portion connected to the tubular structure and an upper portion, which is connectable to the lower portion by means of an attachment means, e.g. a bolt and nut connection. Further, it is for many seat arrangements possible to change the angle between the seat and the seat post. However, the splash guard as described herein is also applicable for other kinds of seat arrangements.

When mounted in the seat arrangement of the bicycle, the longitudinal direction L and the transverse direction T of the splash guard may substantially coincide with the longitudinal and transverse direction of the bicycle.

The front portion is adapted to extend over the seat post, when the splash guard is mounted in the seat arrangement. The front portion is then located above the seat post, e.g. above the attachment unit, but below the seat. Further, the front portion is adapted to extend in front of the seat post, and is adapted to engage with the support system in front of the seat post, e.g. in front of the attachment unit. By allowing the front portion to engage with the support system in front of the seat post, a safe and stable connection to the seat arrangement is provided. This will for example help to keep the splash guard in a desired position relative to the seat arrangement, also when using the bicycle in rough terrain. The front portion may for example engage with the seat rails.

The central portion is to be located behind the seat post of the bicycle. The central portion is adapted to extend between the rear side of the seat post, e.g. the rear side of the attachment unit comprised in the seat post, and a rear end of the seat.

The rear portion is adapted to extend in a rearward direction from the seat, such that the splash guard is able to catch dirt, mud and/or water thrown up from a rear tyre of the bicycle.

The terms front portion, central portion and rear portion are related to the positions the splash guard will have when the seat is positioned in an average longitudinal position relative to the seat post. As mentioned above, the seat may be adjusted in a longitudinal direction relative to the seat post. Thereby the delimitations of the portions will also be displaced in relation to the rear side of the seat post and the rear end of the seat in a similar way.

The splash guard is self-supporting. The rear portion is hence able to protrude in a rearward direction from the seat arrangement without having any support or attachment to the bicycle other than by the other portions of the splash guard being mounted in the seat arrangement.

The splash guard is easy to mount and dismount, as for example by using the method below. It may be performed by hand. No tools are needed to mount or dismount the splash guard. Further the mounting is safe. The splash guard is provided with a safe and stable connection to the seat arrangement, such that the splash guard will not slip out of position or fall off.

The splash guard may comprise, or be made of, a resilient material and be shaped such that the splash guard forms a three-dimensional shape, when the central portion is held in tension in the transverse direction.

Examples of suitable resilient materials are plastic, cardboard or metal foil, i.e. it is possible to bend or fold the material to obtain the desired three-dimensional shape of the splash guard when mounted in the seat arrangement. By utilizing such materials, the splash guard may further be given a low weight. No extra attachment means are needed, such as screws, clips or nuts and bolts, which would add to the weight, and which would also be easy too loose, since the splash guard is kept in place due to the resiliency of the material.

The splash guard may be shaped such that it forms a three-dimensional shape, when the central portion is held in tension in the transverse direction, e.g. by the support system of the seat arrangement, e.g. held in tension between the seat rails behind the seat post.

The splash guard may be substantially flat when untensioned. Being untensioned means that it is not subjected to any external force. It is then in a relaxed state. This makes the splash guard easy to manufacture, store and distribute.

As an alternative, the splash guard may be manufactured such that it has a three-dimensional shape also when untensioned. It may e.g. be injection-moulded or thermoformed. This shape may be more or less the same shape, as the three-dimensional shape the splash guard is desired to have when mounted in the seat arrangement.

When the splash guard is mounted in the seat arrangement, the front portion may have a surface, whereof at least portion is facing a front side of the seat post. The front portion may e.g. be bent and/or folded in the longitudinal direction, such that a portion of an underside of the front portion faces in a direction towards the front side of the seat post. The front portion may abut the seat post, e.g. abut on the attachment unit. There may also be a gap between the front portion and the seat post. The front portion may face the seat post straight on, or they may be in an angled position relative to each other.

In case the support system comprises a pair of seat rails, the front portion may be adapted to pass through the pair of seat rails in front of the seat post, when the splash guard is mounted in the seat arrangement, the seat rails thereby engaging with the front portion. Thereby the seat rails may help to keep the front portion under lateral tension, which may be used to obtain a desired three-dimensional shape of the front portion. Passing through the seat rails also contributes to provide a safe mounting.

The front portion of the splash guard may comprise a front end part, which is adapted to form an angle with a longitudinal direction of the central portion, when the splash guard is mounted in the seat arrangement. The front end part may be bent and/or folded in the longitudinal direction, e.g. in order to be able to reach the seat rails in front of the seat post. The angle may be between 0° and 90°, preferably between 10° and 80°, more preferably between 20° and 70°, most preferably between 30° and 60°.

The front end part may be adapted to abut against at least a portion of a front edge of the seat post and/or at a front side of the seat post, when the splash guard is mounted in the seat arrangement. The splash guard may be positioned further forward with a gap between the front end part and the set post, but it is preferred to allow the front end part to abut against the front edge or the front side of the seat post, since that will help to keep the splash guard in a stable position. This helps to provide a safe mounting.

The front portion of the splash guard may comprise a first fold line defining the front end part, such that the front end part is located in front of the first fold line. The first fold line may extend from one lateral side of the front portion to the other, or over just a portion of the transverse width. The first fold line thus has a transverse extension. In addition, it may have a longitudinal extension, e.g. being curved in a rearward longitudinal direction. Suitable curve shapes for the first fold line is e.g. a shape of a V with a rounded apex or an arcuate shape. Even if a straight fold line would work, it is in general preferred to have a curved shape in order to obtain the desired three-dimensional shape when the splash guard is mounted in the seat arrangement. Further, it is preferred to have a first fold line without a sharp tip, since a sharp tip may introduce a point where a fracture would be more likely to start and/or it may introduce a local discolouring, e.g. if the splash guard is made of coloured plastics. The apex may have a radius of curvature in the range of 5 to 30 mm, preferably in the range of 10 to 20 mm. If using the V-shape, the two straight sections may form an angle between 60 °and 180° with each other, preferably between 90° and 150°, more preferably between 100° and 140°.

The front portion of the splash guard may comprise at least one engaging means adapted to engage with a portion of the support system, which portion is adapted to be located in front of the seat post, when the splash guard is mounted in the seat arrangement. Preferably, there is at least one engaging means at each lateral side of the front portion. The engaging means may be located in the above-mentioned front end part.

The engaging means may comprise at least one notch at a lateral side of the front portion of the splash guard, preferably at least one notch at each lateral side of the front portion. The notch may be adapted to receive a portion of one of the seat rails, which seat rail portion is located in front of the seat post, when the splash guard is mounted in the seat arrangement. The notch, or notches, may provide additional means for keeping the splash guard in position, even when the bicycle is used in rough terrain.

The engaging means engaging with the support system, e.g. the notches gripping around the seat rails, will help to keep the splash guard in a safe and stable position. However, also a splash guard without engaging means may be kept in place due to the lateral tension exerted to the front portion by the support system, e.g. by the seat rails.

A width of the front portion, where it is adapted to engage with the pair of seat rails, may be at least somewhat larger than a transverse distance between the seat rails at a location where it engages with the front portion, such that the front portion is held in lateral tension, when the splash guard is mounted in the seat arrangement. The suitable width may vary dependent on the resilient properties of the material, e.g. how easy it is to bend or fold, and how it engages with the support system.

As an alternative to, or a complement to, having a width of the front portion, where it is adapted to engage with the pair of seat rails, somewhat larger than the transverse distance between the seat rails at the location where it engages with the front portion, the front portion may be held in place by the above-mentioned engaging means. It would then be possible to have this width equal to or less than the distance between the seat rails, since the engaging means will provide engagement with the support system in front of the seat post. Further, if the splash guard comprises engaging means such as notches, this width may for certain embodiments be determined as the smallest transverse distance between the engaging means.

The splash guard may comprise at least one second fold line extending substantially in the longitudinal direction of the splash guard at least in the central portion. The second fold line may extend, at least partly, also into the front portion and/or the rear portion.

One, two, three or more second fold lines may be used. These will help to provide a desired three-dimensional shape, when the splash guard is mounted in the seat arrangement. If using two, three, four or more second fold lines, they may extend substantially in the longitudinal direction of the splash guard at least in the central portion, preferably extending in parallel.

It has been found appropriate to use two second fold lines extending substantially in the longitudinal direction of the splash guard at least in the central portion, preferably extending in parallel, since this provides the splash guard with a substantially flat upper surface of the central portion when mounted in the seat arrangement. The substantially flat upper surface will help to keep the splash guard in a stable position. In particular, the substantially flat upper surface helps to prevent rotation out of position when seen along a rotational axis going in the longitudinal direction of the splash guard.

The central portion may comprise a widening, the widening being adapted to be held in tension in the transverse direction by the support system, e.g. by the seat rails, behind the seat post, when the splash guard is mounted in the seat arrangement. The widening has a larger maximum transverse width than the maximum transverse width of the front portion and the rear portion. The widening is useful when adapting the splash guard to different models of seat arrangements, where the configuration of the seat rails, e.g. their transverse distance, may vary from one model to another.

The widening may comprise an ear flap at a lateral side of the central portion, preferably an ear flap at each lateral side, the ear flap being adapted to press against one of the seat rails behind the seat post, when the splash guard is mounted in the seat arrangement.

A lateral side of the central portion in front of the ear flap may in an untensioned state of the splash guard have a curved shape. The curved shape may be selected such that the front portion passes freely over the seat post, e.g. over the attachment unit, when the splash guard is mounted in the seat arrangement.

The lateral sides of the central portion behind the widening may also have a curved shape. As an alternative they may be straight or partly straight.

The rear portion may comprise at least one third fold line extending substantially in the longitudinal direction of the splash guard, preferably along a longitudinal centre-line of the splash guard. If using two, three or more third fold lines in the rear portion, they preferably extend in parallel. The third fold line or lines may be used to obtain the desired three-dimensional shape of the rear portion, when mounted in the seat arrangement. The third fold line or lines may also result in an increased structural strength of the rear portion.

The splash guard may comprise at least one fourth fold line extending substantially in the transverse direction of the splash guard. Thereby, the splash guard may be folded double and inserted below the seat, e.g. above the seat post and between the seat rails behind the seat post, when not in use, such that the splash guard is easily available when needed.

The position of the fourth fold line may be close to the thought line delimiting the central portion from the rear portion, and they may even coincide, such that the fourth fold line delimits the rear portion from the central portion. The fourth fold line may suitably be located at about half of the longitudinal length of the splash guard. Thereby, the splash guard may be folded double into halves. It is also possible to use two fourth fold lines and fold the splash guard into three parts, and so forth.

When the splash guard is folded, i.e. not in use, it may be pushed as far forward below the seat as possible. As an alternative, or a complement, the front portion may be engaged with the support system in front of the seat post, e.g. to the seat rails, similar as to when the splash guard is in use. It is hence possible to double-fold the splash guard according to the invention without dismounting it from the seat arrangement, by allowing the front portion and the central portion maintain the positions they have when the splash guard is in use and by folding the rear portion and inserting it between the central portion and the seat.

It would also be possible to fold a splash guard without a fourth fold line, but if the fourth fold line provides a defined location for the fold.

In a second aspect of the present invention, there is provided a method for mounting a splash guard according to above to a seat arrangement of a bicycle. The seat arrangement comprises a seat, a support system and a seat post, the seat being connectable to the seat post by means of the support system. The splash guard has a longitudinal direction and a transverse direction. The splash guard comprises a front portion, a central portion and a rear portion.

The method comprises
- bending the central portion in the transverse direction,
- inserting the front portion into the seat arrangement from behind the seat post,
- pushing the splash guard forward in relation to the seat arrangement, such that the front portion moves below the seat and above the seat post,
- engaging the front portion with the support system in front of the seat post.

The method is easy and intuitive to perform. It may be performed without the use of any tools. The splash guard is given a stable position relative to the seat arrangement, such that the splash guard will stay in place also when the bicycle is used in rough terrain.

In case the support system comprises a pair of seat rails and the splash guard comprises at least one notch at a lateral side of the front portion of the splash guard, preferably at least one notch at each lateral side of the front portion, the method may further comprise
- inserting the front portion between the seat rails behind the seat post when inserting the front portion into the seat arrangement,
- engaging the at least one notch with a portion of a seat rail forming part of the support system in front of the seat post.

In case the splash guard comprises a first fold line, the first fold line defining a front end part of the front portion of the splash guard, the method may comprise
- folding the front portion at the first fold line, such that the first fold line is to be located in front of the seat post. The splash guard is preferably positioned in the seat arrangement such that the front end part abuts against at least a portion of a front edge of the seat post.

The front portion may be folded at the first fold line, before the front portion is inserted into the seat arrangement from behind the seat post. It may be performed before, or after, bending the central portion in the transverse direction. As an alternative, the front portion may be folded after it has been inserted into the seat arrangement.

### BRIEF DESCRIPTION OF THE DRAWINGS

The present invention will hereinafter be further explained by means of non-limiting examples with reference to the appended drawings wherein:
- Fig. 1: schematically illustrates a seat arrangement of a bicycle,
- Fig. 2: is a schematic view of a splash guard according to a first embodiment of the invention,
- Fig. 3: is a schematic view of a splash guard according to a second embodiment of the invention,
- Fig. 4: is a schematic perspective view of the splash guard according to the second embodiment, when mounted in the seat arrangement,
- Fig. 5: is a schematic side view of the splash guard according to the second embodiment, when mounted in the seat arrangement,
- Fig. 6: is a schematic view of a splash guard according to a third embodiment of the invention, and
- Fig. 7: illustrates a method for mounting a splash guard to a seat arrangement.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

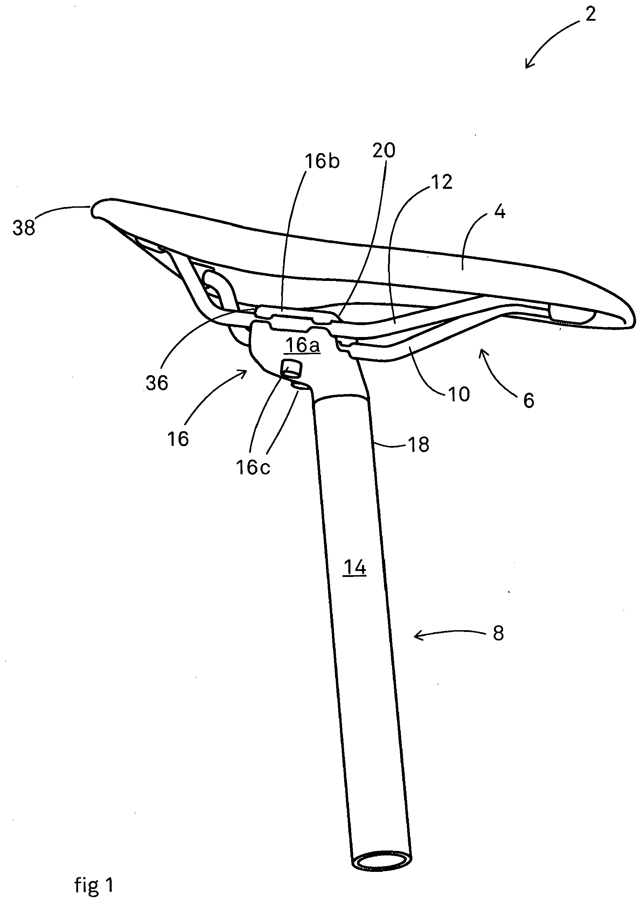

Figure 1 schematically illustrates a typical seat arrangement 2 of a bicycle. The seat arrangement 2 comprises a seat 4, a support system 6 and a seat post 8. The support system 6 comprises a pair of seat rails, in turn comprising a first seat rail 10 at a left-hand side of the seat and a second seat rail 12 at a right-hand side of the seat 4, wherein the left-hand side and right-hand side are defined from the point of view of a possible user sitting on the bicycle would have. The seat post 8 comprises a cylindrical or tubular structure 14 for attachment of the seat arrangement 2 to a frame of the bicycle. The tubular structure 14 may also allow height adjustment of the seat 4 in relation to a frame of the bicycle. The seat post 8 further comprises an attachment unit 16 for attachment of the seat 4 to the seat post 8 via the support system 6, e.g. by attachment of the seat rails 10, 12 to the attachment unit 16. The seat 4 may be adjusted in a longitudinal direction L relative to the seat post 8 by selecting which portion of the seat rails 10, 12 is attached to the attachment unit 16. The seat rails 10, 12 may e.g. be slid through the attachment unit 16 in order to reach the desired position. In the illustrated example the attachment unit 16 comprises a lower portion 16a connected to the tubular structure 14 and an upper portion 16b, which is connectable to the lower portion 16a by means of an attachment means, illustrated as a bolt and nut connection 16c. The attachment unit 16 is commonly used in seat arrangements 2 for bicycles and is known to the skilled person. The seat post 8 may additionally comprise one or more additional attachment means, such as a screw or a nut and bolt connection, for connection of the other items to the seat post 8. The seat post 8 has a front side 18 facing in a forward direction of the bicycle. In the illustrated example, the tubular structure 14 has a circular cross-section, and the front side 18 is represented by a line along the tubular structure 14. The seat post 8 further has a front edge 20, in the illustrated example defined by the edge of the upper portion 16b of the attachment unit 16.

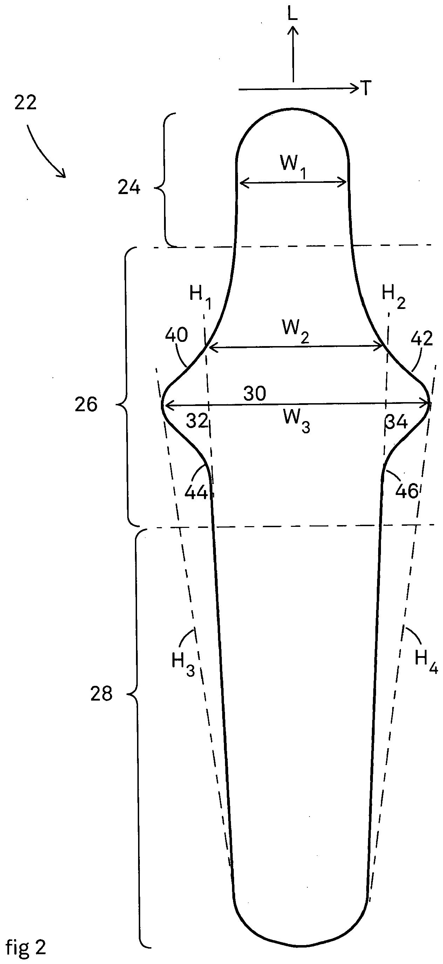

Figure 2 schematically illustrates a splash guard 22 according to a first embodiment of the invention. The splash guard 22 is appropriate for use in seat arrangement 2 like the one illustrated in Figure 1. The splash guard 22 has a longitudinal direction L and a transverse direction T. When mounted in the seat arrangement 2 of a bicycle, the longitudinal direction L and the transverse direction T of the splash guard 22 will substantially coincide with the longitudinal and transverse direction of the bicycle. Figure 2 however illustrates the splash guard 22 in an untensioned state. It is then substantially flat.

The splash guard 22 comprises a front portion 24, a central portion 26 and a rear portion 28. The splash guard 22 may comprise of, or be made of, a resilient material, e.g. plastic, cardboard or metal foil, i.e. it is possible to bend the material. Further, the splash guard 22 is shaped such that it forms a three-dimensional shape, when the central portion 26 is held in tension in the transverse direction T, e.g. by the seat rails 10, 12 of the seat arrangement 2.

The central portion 26 is to be located behind the seat post 8 of the bicycle. The central portion 26 is adapted to extend between the rear side of the seat post 8, here the rear side 36 of the attachment unit 16 comprised in the seat post 8, and a rear end 38 of the seat 4.

The rear portion 28 is adapted to extend in a rearward direction from the seat 4, such that the splash guard 22 is able to catch dirt, mud and/or water thrown up from a rear tyre of the bicycle.

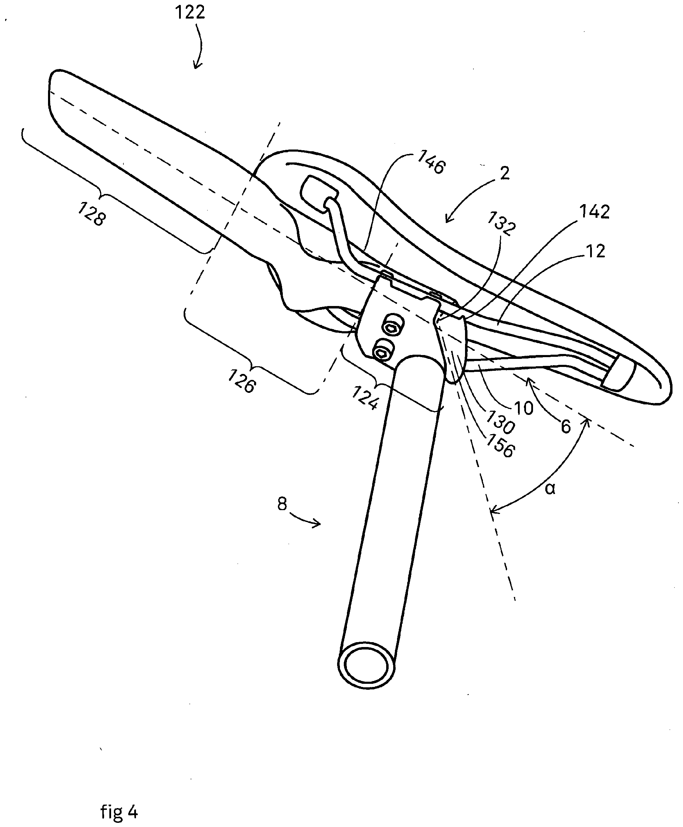

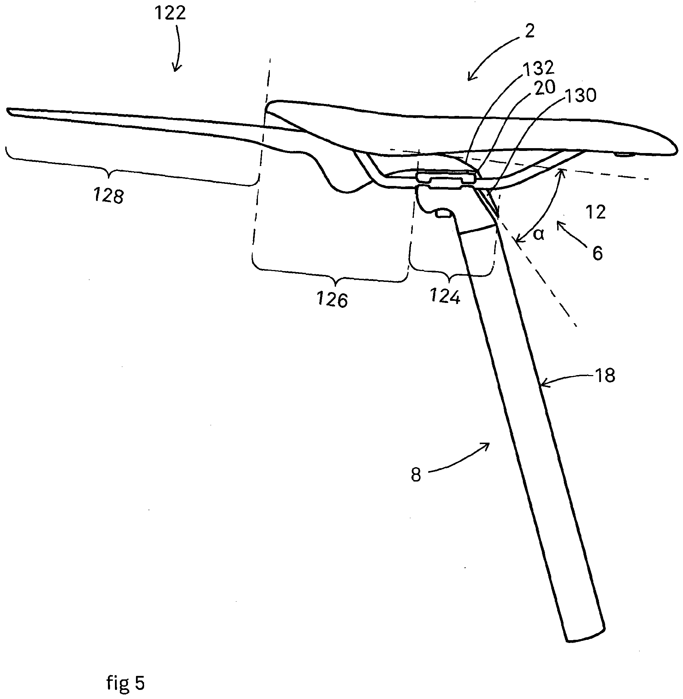

The front portion 24 is adapted to extend over the seat post 8, in particular over the attachment unit 16, when the splash guard 22 is mounted in the seat arrangement 2. The front portion is then located above the seat post 8, in the illustrated example above the attachment unit 16, but below the seat 4. Further, the front portion 24 is adapted to extend in front of the seat post 8, and is adapted to engage with the support system 6 in front of the seat post 8, in particular in front of the attachment unit 16. The front portion 24 may e.g. engage with the seat rails 10, 12. This is further explained below, in conjunction with Figures 4 and 5 showing a splash guard 122 when mounted in a seat arrangement 2 of a bicycle. A portion of an underside of the front portion 24 is adapted to face the front side 18 of the seat post 8, when the splash guard 22 is mounted in the seat arrangement 2.

A width w₁ of the front portion 24 where it engages with the support system 6 in front of the seat post 8 may be at least somewhat larger than the distance between the seat rails 10, 12 at the point of engagement, such that the front portion 24 is held in lateral tension, i.e. tension in the transverse direction T, when mounted in the seat arrangement 2.

A width w₂ of the central portion 26 where it engages with the support system 6 behind the seat post 8 is preferably at least somewhat larger than the distance between the seat rails 10, 12 at the point of engagement behind the seat post 8, such that the central portion 26 is held in lateral tension, when mounted in the seat arrangement 2, such that the central portion 26 obtains a three-dimensional shape influencing the shape of the whole splash guard 122. Since the distance between the seat rails 10, 12 is larger behind the seat post 8 than in front of the seat post 8, or as large, the width w₂ of the central portion 26 is typically larger than the width w₁ of the front portion 24. The suitable width w₂ of the central portion 26 may vary dependent on the resilient properties of the material, e.g. how easy it is to bend or fold and how it engages with the support system 6.

The terms front portion 24, central portion 26 and rear portion 28 are related to the positions the splash guard 22 will have when the seat 4 is positioned in an average longitudinal position relative to the seat post 8. As mentioned above, the seat 4 may be adjusted in a longitudinal direction L relative to the seat post 8. Thereby the delimitations of the portions 24, 26, 28 will also be displaced in relation to the rear side of the seat post 8 and the rear end 38 of the seat 4 in a similar way.

As an option, the central portion 26 may comprise a widening 30, as is illustrated in Figure 2. The widening 30 has a larger maximum transverse width w₃ than the maximum transverse width of the front portion 24 and the rear portion 28. In the illustrated embodiment, the widening 30 comprises a first ear flap 32 at the lateral side of the central portion 26 and a second ear flap 34 at the opposite lateral side of the central portion 26. The first ear flap 32 is located laterally outside of a first help line H₁ following the left-hand lateral edge of the rear portion 28. The second ear flap 34 is located laterally outside of a second help line H₂ following the right-hand lateral edge of the rear portion 28. The widening 30 is useful when adapting the splash guard 22 to different models of seat arrangements, where the configuration of the seat rails 10, 12, e.g. their transverse distance, may vary from one model to another.

The lateral sides 40, 42 of the central portion 26 in front of the widening 30 preferably have a curved shape, as is illustrated by the first embodiment. The curved shape may be selected such that the front portion 124 passes freely over the seat post 8, e.g. over the attachment unit 16, when the splash guard 122 is mounted in the seat arrangement 2, as may be gleaned from Figures 4 and 5. The curved shape may be chosen to fit different models of seat arrangement, having more or less bulky attachment units, such that the front portion anyway is able to pass over the attachment unit also for the bulky models.

The lateral sides 44, 46 of the central portion 26 behind the widening 30 may also have a curved shape, as is illustrated by the first embodiment. As an alternative, however not illustrated, the lateral sides 44, 46 of the central portion 26 behind the widening 30 may, for example, also be straight, e.g. following the help lines H₃ and H₄ going from the tips of the ear flaps 32, 34 to the lateral sides at the end of the rear portion 28.

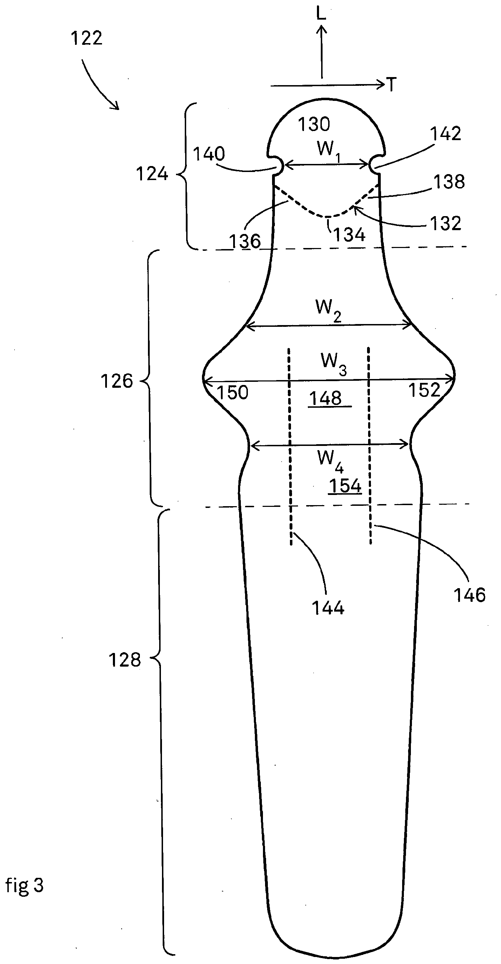

Figure 3 schematically illustrates a splash guard 122 according to a second embodiment of the invention. Similar to the first embodiment, the splash guard 122 comprises a front portion 124, a central portion 126 and a rear portion 128. Figure 3 illustrates the splash guard 122 in an untensioned state. It is then substantially flat.

The front portion 124 comprises a front end part 130, which is defined by a first fold line 132. Thereby, the front end part 130 can be folded to obtain an angle α in relation to the rest of the splash guard 122, in particular to the central portion 126, as illustrated in Figures 4 and 5. The first fold line 132 has the shape of V with a rounded apex 134, i.e. a first straight section 136 followed by the rounded apex 134 and a second straight section 138. In the illustrated example the apex 134 has a radius of curvature of 13 mm and the two straight sections 136, 138 form an angle of about 120° with each other. As an alternative, the first fold line 132 may have an arcuate shape or any other shape giving a curvature in a rearward longitudinal direction. Even if a straight fold line would work, it is preferred to have a curved shape in order to obtain the desired three-dimensional shape when the splash guard 122 is mounted in the seat arrangement 2. Further, it is preferred to have a first fold line 132 without a sharp tip, since a sharp tip may introduce a point where a fracture would be more likely to start, or it may introduce a local discolouring, e.g. if the splash guard is made of coloured plastics.

The front end part 130 comprises engaging means 140, 142 intended for engaging the splash guard 122 with the support system 6 of the seat arrangement 2, e.g. by attachment to the seat rails 10, 12. In the illustrated embodiment, the engaging means comprises a first notch 140 and a second notch 142. The first notch 140 is adapted to grip around the first seat rail 10 in front of the seat post 8, when the splash guard 122 is mounted in the seat arrangement 2. Similarly, the second notch 142 is adapted to grip around the second seat rail 12 in front of the seat post 8. The notches 140, 142 help to keep the splash guard 122 in a defined relative position to the seat rails 10, 12, thereby preventing the splash guard 122 from slipping out of position. The notches 140, 142 will also help to prevent unintentional removal of the splash guard 122 from the seat arrangement 2 of the bicycle.

For the illustrated embodiment, the width w₁ of the front portion 124 is determined between the notches 140, 142. The width w₁ of the front portion 124 may be selected to be at least somewhat larger than the distance between the seat rails 10, 12 at the point of engagement in front of the seat post 8, such that the front portion 124 is held in lateral tension, when mounted in the seat arrangement 2.

Even if the width w₁ of the front portion 124 would be less than the transverse distance between the seat rails 10, 12 at the point of engagement in front of the seat post 8, the front portion 124 would be held in place by the notches 140, 142.

Similar as for the first embodiment, the width w₂ of the central portion 126 where it engages with the support system 6 behind the seat post 8 is at least somewhat larger than the distance between the seat rails 10, 12 at the point of engagement in front of the seat post 8. Further, the central portion 126 comprises a widening 148 with ear flaps 150, 152, similar as for the first embodiment.

In addition, and as an option only, the central portion 126 comprises a waist 154 having a transverse width w₄. The waist 154 may be useful when mounting the splash guard 122 in certain models of seat arrangements.

The splash guard 122 of the second embodiment comprises two second fold lines 144, 146 extending substantially in the longitudinal direction L of the splash guard 122, at least in the central portion 126 thereof, preferably extending in parallel as is illustrated. The two second fold lines 144, 146 may extend partly into the rear portion 128 as is illustrated. One, two, three or more second fold lines 144, 146 may be used. These will help to provide a desired a three-dimensional shape, when the splash guard 122 is mounted in the seat arrangement 2. However, when using two fold lines 144, 146 as in the illustrated example, a substantially flat upper surface of the central portion 126 is provided when mounted in the seat arrangement 2. The substantially flat upper surface will help to keep the splash guard 122 in a stable position. In particular, the substantially flat upper surface helps to prevent rotation out of position when seen along an axis going in the longitudinal direction L of the splash guard 122.

Figures 4 and 5 illustrate the splash guard 122 of the second embodiment, according to Figure 3, when mounted in the seat arrangement 2 of a bicycle, in a perspective view and in a side view, respectively.

The splash guard 122 is self-supporting. The resilient material of the splash guard 122 helps to provide the three-dimensional shape of the splash guard 122 when the central portion 126 is held in lateral tension by the support system 6. The width w₂ of the central portion 26, where it engages with the support system 6 behind the seat post 8, measured when flat, is at least somewhat larger than the distance between the seat rails 10, 12 at the point of engagement. Thereby the central portion 126 is held in lateral tension, such that the splash guard 122 obtains a three-dimensional shape. The two second fold lines 144, 146, which are more easily viewed in Figure 3, help to obtain the desired three-dimensional shape, since the splash guard 122 will fold along these second fold lines 144, 146.

The front portion 124 engages with the support system 6 in front of the seat post 8. A portion of an underside 156 of the front portion 124 faces in a direction against the front side 18 of the seat post 8. A part of the front portion 124 passes between the seat rails 10, 12 in front of the seat post 8. The front end part 130 is folded along the first fold line 132. The front end part 130 hence forms an angle α to a longitudinal direction of the central portion 126. The angle α may be between 0 ° and 90°, preferably between 10° and 80°, more preferably between 20° and 70°, most preferably between 30° and 60°, as is best gleaned in Figure 5.

The notches 140, 142 of the front end part 130 grip around the seat rails 10, 12 in front of the seat post 8. The width w₁ of the front portion 124, measured when flat, is at least somewhat larger than the distance between the seat rails 10, 12 at the point of engagement, such that the front portion 124 is held in lateral tension by the seat rails 10, 12. The three-dimensional shape of the front portion 124 is then, at least partly, determined by the shape of the first fold line 132. Further, the first fold line 132 is in the illustrated embodiment located such that the front end part 130 may abut against the front edge 20 of the attachment unit 16, which is comprised in the seat post 8. The splash guard 122 may be positioned further forward, i.e. the front portion 124 may engage with the support system 6 of the seat arrangement 2 further forward in front of the seat post 8, but it is preferred to allow the front end part 130 to abut against the front edge 20 or the front side of the seat post, since that will help to keep the splash guard 122 in a stable position.

By letting the front portion 124 extend over the seat post and engage with the support system 6 in front of the seat post 8, the splash guard 122 is given a stable position relative to the seat arrangement 2, such that the splash guard 122 will stay in place also when the bicycle is used in rough terrain. The notches 142, 144 gripping around the seat rails 10, 12, as illustrated by the second embodiment, will help to keep the splash guard 122 in the stable position. However, also a splash guard 22 without notches, like the one of the first embodiment, may be kept in place due to the lateral tension exerted to the front portion 24 by the seat rails 10, 12.

If there is no first fold line 132, like for the first embodiment, the front portion 24 may be curved by being bent to engage with the support system 6 in front of the seat post 8. However, by using the first fold line 132 a predefined curvature for the front portion 124 is provided, in turn providing easy mounting of the splash guard 122 in the seat arrangement 2.

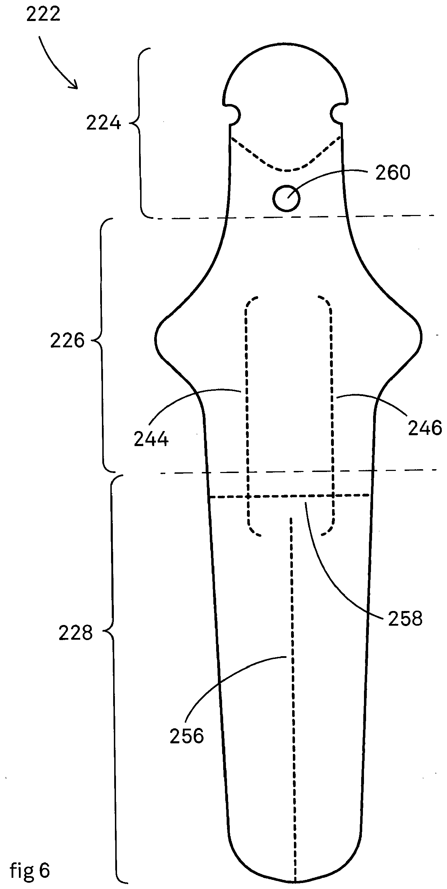

Figure 6 schematically illustrates a splash guard 222 according to a third embodiment of the invention. Similar to the first and second embodiments, the splash guard 222 comprises a front portion 224, a central portion 226 and a rear portion 228. Figure 6 illustrates the splash guard 222 in an untensioned state. It is then substantially flat. The third embodiment of the splash guard 222 has many features in common with the second embodiment of the splash guard 122. Below is commented on the differences.

The central portion 226 of the third embodiment of the splash guard 222 does not comprise any waist, but it may as well have a similar waist 154 as for the second embodiment.

The two second fold lines 244, 246 have a curved shape at their respective ends. This reduces, or avoids, the risk of introducing a point where a fracture would be more likely to start, or the risk of introducing a local discolouring, e.g. if the splash guard is made of coloured plastics. The two second fold lines 244, 246 extend partly into the rear portion 228.

The rear portion 228 comprises a third fold line 256 extending substantially in the longitudinal direction L of the splash guard 222, here illustrated as extending along a longitudinal centre-line of the splash guard 222 in the rear portion 228 thereof, which is suitable if one third fold line is used. If instead using two, three or more third fold lines in the rear portion they preferably extend in parallel. The third fold lines may be used to obtain the desired three-dimensional shape of the rear portion 228, when mounted in the seat arrangement 2. The third fold line 256 may also result in an increased structural strength of the rear portion 228, e.g. when being hit by mud thrown up by the tyre.

The splash guard 222 also comprises a fourth fold line 258. The fourth fold line 258 is suitably located at about half of the longitudinal length of the splash guard 222. Thereby, the splash guard 222 may be folded double and inserted below the seat 4, above the seat post 8 and between the seat rails 10, 12 behind the seat post 8, when not in use, such that the splash guard 222 is easily available when needed. The position of the fourth fold line 258 is close to the thought line delimiting the central portion 226 from the rear portion 228, and they may even coincide.

The skilled person would understand that any embodiment of the splash guard according to the invention may comprise one or more third fold lines 256 and/or fourth fold lines 258.

As an option, the splash guard 222 may comprise a hole 260, which may be used to hang the splash guard 222 on a rod, e.g. in a shop selling bicycle accessories.

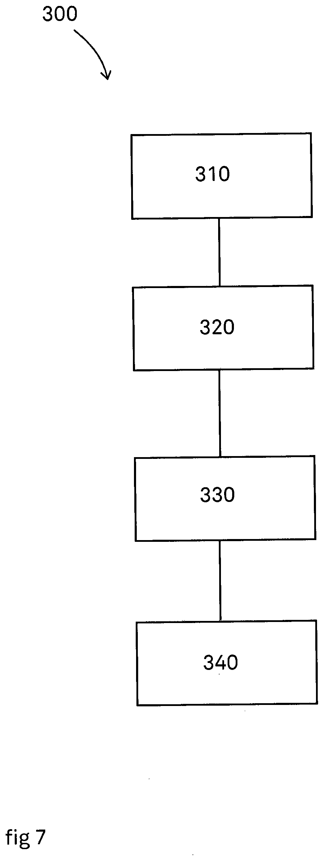

Figure 7 schematically illustrates a method 300, which may be used for mounting a splash guard 22, 122, 222 according to the invention in a seat arrangement 2 of a bicycle.

A first step 310 of the method 330 comprises: Bending the central portion 26, 126, 226 in the transverse direction T. This may be done by hand, without the use of any tools.

Thereafter a second step 320 comprises: Inserting the front portion 24, 124, 224 into the seat arrangement 2 from behind the seat post 8. For the illustrated embodiments of the splash guard 22, 122, 222, this means inserting the front portion 24, 124, 224 between the seat rails 10, 12 behind the seat post 8.

Then a third step 330 comprises: Pushing the splash guard 22, 122, 222 forward in relation to the seat arrangement 2, such that the front portion 24, 124, 224 moves below the seat 4 and above the seat post 8.

After that step 340 follows, comprising: Engaging the front portion 24, 124, 224 with the support system 6 in front of the seat post 8.

If the splash guard 122, 222 comprises notches 140, 142, step 340 may be done by engaging each notch 140, 142 with a portion of the seat rail 10, 12 in front of the seat post 8.

If the splash guard 122, 222 comprises a first fold line 132, step 310 may include folding the front portion 124, 224 at the first fold line 132, such that the first fold line 132 is to be located in front of the seat post 8. The splash guard 122, 222 is preferably positioned such that the front end part 130 abuts against at least a portion of the front edge 20 of the seat post 8.

The whole method may be performed by hand. There is no need to use any tools. Further, the splash guard 22, 122, 222 may be adapted to many different models of seat arrangements 2.

Further modifications of the invention within the scope of the appended claims are feasible. The seat arrangement 2 of Figure 1 is given as an example. The splash guard according to the invention is also applicable for other kinds of seat arrangements.

As such, the present invention should not be considered as limited by the embodiments and figures described herein. Rather, the full scope of the invention should be determined by the appended claims, with reference to the description and drawings.

## Claims

1. A self-supporting rear splash guard (22, 122, 222) for a bicycle, said bicycle having a seat arrangement (2) comprising a seat (4), a support system (6) and a seat post (8), said seat (4) being connectable to said seat post (8) by means of said support system (6), said support system (6) comprising a pair of seat rails (10, 12),
said splash guard (22, 122, 222) having a longitudinal direction (L) and a transverse direction (T), said splash guard (22, 122, 222) comprising a front portion (24, 124, 224), a central portion (26, 126, 226) and a rear portion (28, 128, 228),
said front portion (24, 124, 224) of said splash guard (22, 122, 222) being adapted to extend over said seat post (8), when said splash guard (22, 122, 222) is mounted in said seat arrangement (2),
**characterized in that**
said front portion (24, 124, 224) of said splash guard (22, 122, 222) is adapted to engage with said support system (6) in front of said seat post (8), when said splash guard (22, 122, 222) is mounted in said seat arrangement (2),
wherein said front portion (24, 124, 224) is adapted to pass through said pair of seat rails (10, 12) in front of said seat post (8), said seat rails (10, 12) thereby engaging with said front portion (24, 124, 224).

2. The splash guard (22, 122, 222) according to claim 1, comprising or being made of a resilient material, said splash guard (22, 122, 222) being shaped such that it forms a three-dimensional shape, when said central portion (26, 126, 226) is held in tension in said transverse direction (T) and said splash guard (22, 122, 222) is substantially flat when untensioned.

3. The splash guard (22, 122, 222) according to any one of the preceding claims,
wherein said front portion (24, 124, 224) has a surface, whereof at least portion is facing a front side (18) of said seat post (8), when said splash guard (22, 122, 222) is mounted in said seat arrangement (2).

4. The splash guard (122, 222) according to any one of the preceding claims,
wherein said front portion (124, 224) of said splash guard (122, 222) comprises a front end part (130), which is adapted to form an angle (α) with a longitudinal direction of said central portion (126, 226), when said splash guard (122, 222) is mounted in said seat arrangement (2), said angle (α) being between 0° and 90.

5. The splash guard (122, 222) according to claim 4, wherein said front end part (130) is adapted to abut against at least a portion of a front edge (20) of said seat post (8) and/or at a front side (18) of said seat post (8), when said splash guard (122, 222) is mounted in said seat arrangement (2).

6. The splash guard (122, 222) according to any one of claims 4-5, wherein said front portion (124, 224) of said splash guard (122, 222) comprises a first fold line (132), said first fold line (132) defining said front end part (130), such that said front end part (130) is located in front of said first fold line (132).

7. The splash guard (122, 222) according to any one of the preceding claims,
wherein said front portion (124, 224) of said splash guard (122, 222) comprises at least one engaging means (140, 142) adapted to engage with a portion of said support system (6), which portion is adapted to be located in front of said seat post (8), when said splash guard (122, 222) is mounted in said seat arrangement (2).

8. The splash guard (122, 222) according to claim 7, wherein said engaging means comprises at least one notch (140, 142) at a lateral side of said front portion (124, 224) of said splash guard (122, 222), preferably at least one notch (140, 142) at each lateral side of said front portion (124, 224), said notch (140, 142) being adapted to receive a portion of one of said seat rails (10, 12), which seat rail portion is located in front of said seat post (8), when said splash guard (122, 222) is mounted in said seat arrangement (2).

9. The splash guard (22, 122, 222) according to any one of the preceding claims,
wherein a width (w₁) of said front portion (24, 124, 224), where it is adapted to engage with said pair of seat rails (10, 12), is at least somewhat larger than a transverse distance between said seat rails (10, 12) at a location where it engages with said front portion (24, 124, 224), such that said front portion (24, 124, 224) is held in lateral tension, when said splash guard (22, 122, 222) is mounted in said seat arrangement (2).

10. The splash guard (122, 222) according to any one of the preceding claims,
wherein said splash guard (122, 222) comprises at least one second fold line (144, 146; 244, 246) extending substantially in said longitudinal direction (L) of said splash guard (122, 222) at least in said central portion (126, 226).

11. The splash guard (122, 222) according to claim 10, wherein said splash guard (122, 222) comprises two second fold lines (144, 146; 244, 246) extending substantially in said longitudinal direction (L) of said splash guard (122, 222) at least in said central portion (126, 226), preferably extending in parallel.

12. The splash guard (22, 122, 222) according to any one of the preceding claims,
wherein said central portion (26, 126, 226) comprises a widening (30, 148), said widening (30, 148) being adapted to be held in tension in said transverse direction (T) by said support system (6) behind said seat post (8), when said splash guard (22, 122, 222) is mounted in said seat arrangement (2).

13. The splash guard (22, 122, 222) according to claim 12, wherein said widening (30, 148) comprises an ear flap (32, 34; 150, 152) at a lateral side of said central portion (26, 126, 226), preferably an ear flap (32, 34; 150, 152) at each lateral side, said ear flap (32, 34; 150, 152) being adapted to press against one of said seat rails (10, 12) behind said seat post (8), when said splash guard (22, 122, 222) is mounted in said seat arrangement (2).

14. The splash guard (222) according to any one of the preceding claims, further comprising a fourth fold line (258) extending substantially in said transverse direction (T) of said splash guard (222).

15. A method for mounting a splash guard (22, 122, 222) according to any one of the preceding claims to a seat arrangement (2) of a bicycle,
said seat arrangement (2) comprising a seat (4), a support system (6) and a seat post (8), said seat (4) being connectable to said seat post (8) by means of said support system (6),
said splash guard (22, 122, 222) having a longitudinal direction (L) and a transverse direction (T), said splash guard (22, 122, 222) comprising a front portion (24, 124, 224), a central portion (26, 126, 226) and a rear portion (28, 128, 228),
said method comprising
- bending said central portion (26, 126, 226) in said transverse direction (T),
- inserting said front portion (24, 124, 224) into said seat arrangement (2) from behind said seat post (8),
- pushing said splash guard (22, 122, 222) forward in relation to said seat arrangement (2), such that said front portion (24, 124, 224) moves below said seat (4) and above said seat post (8),
- engaging said front portion (24, 124, 224) with said support system (6) in front of said seat post (8).

## Patentansprüche

1. Selbsttragender hinterer Spritzschutz (22, 122, 222) für ein Fahrrad, wobei das Fahrrad eine Sattelanordnung (2) aufweist, die einen Sattel (4), ein Trägersystem (6) und eine Sattelstütze (8) umfasst, wobei der Sattel (4) mit der Sattelstütze (8) mittels dem Trägersystem (6) verbindbar ist, wobei das Trägersystem (6) ein Sitzschienenpaar (10, 12) umfasst,
wobei der Spritzschutz (22, 122, 222) eine Längsrichtung (L) und eine Querrichtung (T) aufweist, wobei der Spritzschutz (22, 122, 222) einen vorderen Abschnitt (24, 124, 224), einen mittleren Abschnitt (26, 126, 226) und einen hinteren Abschnitt (28, 128, 228) umfasst, wobei der vordere Abschnitt (24, 124, 224) des Spritzschutzes (22, 122, 222) angepasst ist, sich über die Sattelstütze (8) zu erstrecken, wenn der Spritzschutz (22, 122, 222) in der Sattelanordnung (2) befestigt ist,
**dadurch gekennzeichnet, dass**
der vordere Abschnitt (24, 124, 224) des Spritzschutzes (22, 122, 222) angepasst ist, in das Trägersystem (6) vor der Sattelstütze (8) einzugreifen, wenn der Spritzschutz (22, 122, 222) in der Sattelanordnung (2) angebracht ist, wobei der vordere Abschnitt (24, 124, 224) angepasst ist, durch das Sitzschienenpaar (10, 12) vor der Sattelstütze (8) hindurchzulaufen, wobei die Sitzschienen (10, 12) in den vorderen Abschnitt (24, 124, 224) eingreifen.

2. Spritzschutz (22, 122, 222) nach Anspruch 1, der ein elastisches Material umfasst oder aus diesem besteht, wobei der Spritzschutz (22, 122, 222) derartig geformt ist, dass er eine dreidimensionale Form aufweist, wenn der mittlere Abschnitt (26, 126, 226) in die Querrichtung (T) gespannt gehalten wird und der Spritzschutz (22, 122, 222) im Wesentlichen flach ist, wenn er ungespannt ist.

3. Spritzschutz (22, 122, 222) nach einem der vorhergehenden Ansprüche, wobei der vordere Abschnitt (24, 124, 224) eine Fläche aufweist, von der mindestens ein Abschnitt einer Vorderseite (18) der Sattelstütze (8) zugewandt ist, wenn der Spritzschutz (22, 122, 222) in der Sattelanordnung (2) befestigt ist.

4. Spritzschutz (122, 222) nach einem der vorhergehenden Ansprüche, wobei der vordere Abschnitt (124, 224) des Spritzschutzes (122, 222) einen vorderen Endteil (130) umfasst, welcher angepasst ist, einen Winkel (α) mit einer Längsrichtung des mittleren Abschnitts (126, 226) zu bilden, wenn der Spritzschutz (122, 222) in der Sattelanordnung (2) befestigt ist, wobei der Winkel (α) zwischen 0° und 90 beträgt.

5. Spritzschutz (122, 222) nach Anspruch 4, wobei der vordere Endteil (130) angepasst ist, an mindestens einem Abschnitt einer Vorderkante (20) der Sattelstütze (8) und/oder an einer Vorderseite (18) der Sattelstütze (8) anzuliegen, wenn der Spritzschutz (122, 222) in der Sattelanordnung (2) befestigt ist.

6. Spritzschutz (122, 222) nach einem der Ansprüche 4 bis 5, wobei der vordere Abschnitt (124, 224) des Spritzschutzes (122, 222) eine erste Faltlinie (132) umfasst, wobei die erste Faltlinie (132) den vorderen Endteil (130) derartig definiert, dass der vordere Endteil (130) vor der ersten Faltlinie (132) angeordnet ist.

7. Spritzschutz (122, 222) nach einem der vorhergehenden Ansprüche, wobei der vordere Abschnitt (124, 224) des Spritzschutzes (122, 222) mindestens ein Eingriffsmittel (140, 142) umfasst, das angepasst ist, in einen Abschnitt des Trägersystems (6) einzugreifen, der angepasst ist, vor der Sattelstütze (8) angeordnet zu sein, wenn der Spritzschutz (122, 222) in der Sattelanordnung (2) montiert ist.

8. Spritzschutz (122, 222) nach Anspruch 7, wobei das Eingriffsmittel mindestens eine Einkerbung (140, 142) an einer lateralen Seite des vorderen Abschnitts (124, 224) des Spritzschutzes (122, 222), vorzugsweise mindestens eine Einkerbung (140, 142) an beiden lateralen Seiten des vorderen Abschnitts (124, 224) umfasst, wobei die Einkerbung (140, 142) angepasst ist, einen Abschnitt von einer der Sitzschienen (10, 12) aufzunehmen, wobei der Sitzschienenabschnitt vor der Sattelstütze (8) angeordnet ist, wenn der Spritzschutz (122, 222) in der Sattelanordnung (2) montiert ist.

9. Spritzschutz (22, 122, 222) nach einem der vorhergehenden Ansprüche, wobei eine Breite (w₁) des vorderen Abschnitts (24, 124, 224), dort wo er angepasst ist, mit dem Sitzschienenpaar (10, 12) in Eingriff zu stehen, mindestens etwas größer als ein Querabstand zwischen den Sitzschienen (10, 12) an einer Stelle ist, an der er in den vorderen Abschnitt (24, 124, 224) eingreift, sodass der vordere Abschnitt (24, 124, 224) unter seitlicher Spannung gehalten wird, wenn der Spritzschutz (22, 122, 222) in der Sattelanordnung (2) montiert ist.

10. Spritzschutz (122, 222) nach einem der vorhergehenden Ansprüche, wobei der Spritzschutz (122, 222) mindestens eine zweite Faltlinie (144, 146; 244, 246) umfasst, die sich im Wesentlichen in die Längsrichtung (L) des Spritzschutzes (122, 222) mindestens im mittleren Abschnitt (126, 226) erstreckt.

11. Spritzschutz (122, 222) nach Anspruch 10, wobei der Spritzschutz (122, 222) zwei zweite Faltlinien (144, 146; 244, 246) umfasst, die sich im Wesentlichen in die Längsrichtung (L) des Spritzschutzes (122, 222) mindestens im mittleren Abschnitt (126, 226) erstrecken, wobei sie sich vorzugsweise parallel zueinander erstrecken.

12. Spritzschutz (22, 122, 222) nach einem der vorhergehenden Ansprüche, wobei der mittlere Abschnitt (26, 126, 226) eine Verbreiterung (30, 148) aufweist, wobei die Verbreiterung (30, 148) angepasst ist, in die Querrichtung (T) durch das Trägersystem (6) hinter der Sattelstütze (8) unter Spannung gehalten zu werden, wenn der Spritzschutz (22, 122, 222) in der Sattelanordnung (2) montiert ist.

13. Spritzschutz (22, 122, 222) nach Anspruch 12, wobei die Verbreiterung (30, 148) mindestens eine Seitenklappe (32, 34; 150, 152) an einer lateralen Seite des mittleren Abschnitts (26, 126, 226), vorzugsweise eine Seitenklappe (32, 34; 150, 152) an jeder lateralen Seite umfasst, wobei die Seitenklappe (32, 34; 150, 152) angepasst ist, gegen eine der Sitzschienen (10, 12) hinter der Sattelstütze (8) zu drücken, wenn der Spritzschutz (22, 122, 222) in der Sattelanordnung (2) montiert ist.

14. Spritzschutz (222) nach einem der vorhergehenden Ansprüche, der ferner eine vierte Faltlinie (258) umfasst, die sich im Wesentlichen in die Querrichtung (T) des Spritzschutzes (222) erstreckt.

15. Verfahren zum Montieren eines Spritzschutzes (22, 122, 222) an einer Sattelanordnung (2) eines Fahrrads nach einem der vorhergehenden Ansprüche, wobei die Sattelanordnung (2) einen Sattel (4), ein Trägersystem (6) und eine Sattelstütze (8) umfasst, wobei der Sattel (4) mit der Sattelstütze (8) durch das Trägersystem (6) verbindbar ist,
der Spritzschutz (22, 122. 222) eine Längsrichtung (L) und eine Querrichtung (T) aufweist, wobei der Spritzschutz (22, 122, 222) einen vorderen Abschnitt (24, 124, 224), einen mittleren Abschnitt (26, 126, 226) und einen hinteren Abschnitt (28, 128, 228) aufweist,
das Verfahren umfassend
- Biegen des mittleren Abschnitts (26, 126, 226) in die Querrichtung (T),
- Einführen des vorderen Abschnitts (24, 124, 224) in die Sattelanordnung (2) von der Rückseite der Sattelstütze (8),
- Nach-vorn-Drücken des Spritzschutzes (22, 122, 222) in Bezug auf die Sattelanordnung (2), sodass der vordere Abschnitt (24, 124, 224) sich unter den Sattel (4) und über die Sattelstütze (8) bewegt,
- Eingreifen des vorderen Abschnitts (24, 124, 224) mit dem Trägersystem (6) vor der Sattelstütze (8).

## Revendications

1. Garde-boue arrière autoportant (22, 122, 222) pour une bicyclette, ladite bicyclette ayant un agencement de siège (2) comprenant un siège (4), un système de support (6) et un montant de siège (8), ledit siège (4) pouvant être raccordé audit montant de siège (8) au moyen dudit système de support (6), ledit système de support (6) comprenant une paire de rails de siège (10, 12),
ledit garde-boue (22, 122, 222) ayant une direction longitudinale (L) et une direction transversale (T), ledit garde-boue (22, 122, 222) comprenant une partie avant (24, 124, 224), une partie centrale (26, 126, 226) et une partie arrière (28, 128, 228), ladite partie avant (24, 124, 224) dudit garde-boue (22, 122, 222) étant adapté pour s'étendre par-dessus le montant de siège (8) lorsque ledit garde-boue (22, 122, 222) est monté dans ledit agencement de siège (2),
**caractérisé en ce que** :
ladite partie avant (24, 124, 224) dudit garde-boue (22, 122, 222) est adaptée pour s'engager sur ledit système de support (6) devant ledit montant de siège (8) lorsque ledit garde-boue (22, 122, 222) est montée dans ledit agencement de siège (2),
dans lequel ladite partie avant (24, 124, 224) est adaptée pour passer à travers ladite paire de rails de siège (10, 12) devant ledit montant de siège (8), lesdits rails de siège (10, 12) s'engageant de la sorte sur ladite partie avant (24, 124, 224).

2. Garde-boue (22, 122, 222) selon la revendication 1, comprenant ou étant constitué d'un matériau élastique, ledit garde-boue (22, 122, 222) étant conformé de sorte qu'il ait une forme tridimensionnelle lorsque ladite partie centrale (26, 126, 226) est maintenue sous tension dans ladite direction transversale (T) et que ledit garde-boue (22, 122, 222) soit sensiblement plat lorsqu'il n'est pas sous tension.

3. Garde-boue (22, 122, 222) selon l'une quelconque des revendications précédentes, dans lequel ladite partie avant (24, 124, 224) a une surface dont au moins une partie est en regard d'un côté avant (18) dudit montant de siège (8) lorsque ledit garde-boue (22, 122, 222) est monté dans ledit agencement de siège (2).

4. Garde-boue (122, 222) selon l'une quelconque des revendications précédentes, dans lequel ladite partie avant (124, 224) dudit garde-boue (122, 222) comprend une partie d'extrémité avant (130) qui est adaptée pour former un angle (α) avec une direction longitudinale de ladite partie centrale (126, 226) lorsque ledit garde-boue (122, 222) est monté dans ledit agencement de siège (2), ledit angle (α) étant compris entre 0° et 90°.

5. Garde-boue (122, 222) selon la revendication 4, dans lequel ladite partie d'extrémité avant (130) est adaptée pour s'abouter contre au moins une partie d'un bord avant (20) dudit montant de siège (8) et/ou sur un côté frontal (18) dudit montant de siège (8) lorsque ledit garde-boue (122, 222) est monté dans ledit agencement de siège (2).

6. Garde-boue (122, 222) selon l'une quelconque des revendications 4 à 5, dans lequel ladite partie avant (124, 224) dudit garde-boue (122, 222) comprend une première ligne de pliage (132), ladite première ligne de pliage (132) définissant ladite partie d'extrémité avant (130) de sorte que ladite partie d'extrémité avant (130) soit située devant ladite première ligne de pliage (132).

7. Garde-boue (122, 222) selon l'une quelconque des revendications précédentes, dans lequel ladite partie avant (124, 224) dudit garde-boue (122, 222) comprend au moins un moyen d'engagement (140, 142) adapté pour s'engager sur une partie dudit système de support (6), laquelle partie est adaptée pour être située devant ledit montant de siège (8) lorsque ledit garde-boue (122, 222) est monté dans ledit agencement de siège (2).

8. Garde-boue (122, 222) selon la revendication 7, dans lequel ledit moyen d'engagement comprend au moins une encoche (140, 142) sur un côté latéral de ladite partie avant (124, 224) dudit garde-boue (122, 222), de préférence au moins une encoche (140, 142) sur chaque côté latéral de ladite partie avant (124, 224), ladite encoche (140, 142) étant adaptée pour recevoir une partie de l'un desdits rails de siège (10, 12), laquelle partie de rail de siège est située devant ledit montant de siège (8) lorsque ledit garde-boue (122, 222) est monté dans ledit agencement de siège (2).

9. Garde-boue (22, 122, 222) selon l'une quelconque des revendications précédentes, dans lequel une largeur (w₁) de ladite partie avant (24, 124, 224), où elle est adaptée pour s'engager sur ladite paire de rails de siège (10, 12), est au moins un peu plus grande qu'une distance transversale entre lesdits rails de siège (10, 12) à un emplacement où elle s'engage sur ladite partie avant (24, 124, 224) de sorte que ladite partie avant (24, 124, 224) soit maintenue sous tension latérale lorsque ledit garde-boue (22, 122, 222) est monté dans ledit agencement de siège (2).

10. Garde-boue (122, 222) selon l'une quelconque des revendications précédentes, dans lequel ledit garde-boue (122, 222) comprend au moins une seconde ligne de pliage (144, 146; 244, 246) s'étendant sensiblement dans ladite direction longitudinale (L) dudit garde-boue (122, 222) au moins dans ladite partie centrale (126, 226).

11. Garde-boue (122, 222) selon la revendication 10, dans lequel ledit garde-boue (122, 222) comprend deux deuxièmes lignes de pliage (144, 146 ; 244, 246) s'étendant sensiblement dans ladite direction longitudinale (L) dudit garde-boue (122, 222) au moins dans ladite partie centrale (126, 226), de préférence s'étendant en parallèle.

12. Garde-boue (22, 122, 222) selon l'une quelconque des revendications précédentes, dans lequel ladite partie centrale (26, 126, 226) comprend un élargissement (30, 148), ledit élargissement (30, 148) étant adapté pour être maintenu sous tension dans ladite direction transversale (T) par ledit système de support (6) derrière ledit montant de siège (8) lorsque ledit garde-boue (22, 122, 222) est monté dans ledit agencement de siège (2).

13. Garde-boue (22, 122, 222) selon la revendication 12, dans lequel ledit élargissement (30, 148) comprend un volet à oreilles (32, 34 ; 150, 152) sur un côté latéral de ladite partie centrale (26, 126, 226), de préférence un volet à oreilles (32, 34 ; 150, 152) sur chaque côté latéral, ledit volet à oreilles (32, 34; 150, 152) étant adapté pour se presser contre l'un desdits rails de siège (10, 12) derrière ledit montant de siège (8) lorsque ledit garde-boue (22, 122, 222) est monté dans ledit agencement de siège (2).

14. Garde-boue (222) selon l'une quelconque des revendications précédentes, comprenant en outre une quatrième ligne de pliage (258) s'étendant sensiblement dans ladite direction transversale (T) dudit garde-boue (222).

15. Procédé de montage d'un garde-boue (22, 122, 222) selon l'une quelconque des revendications précédentes sur un agencement de siège (2) d'une bicyclette,
ledit agencement de siège (2) comprenant un siège (4), un système de support (6) et un montant de siège (8), ledit siège (4) pouvant être raccordé audit montant de siège (8) au moyen dudit système de support (6),
ledit garde-boue (22, 122, 222) ayant une direction longitudinale (L) et une direction transversale (T), ledit garde-boue (22, 122, 222) comprenant une partie avant (24, 124, 222), une partie centrale (26, 126, 226) et une partie arrière (28, 128, 228),
ledit procédé comprenant les étapes consistant à :
- recourber ladite partie centrale (26, 126, 226) dans ladite direction transversale (T),
- insérer ladite partie avant (24, 124, 224) dans ledit agencement de siège (2) par derrière ledit montant de siège (8),
- pousser ledit garde-boue (22, 122, 222) en avant par rapport audit agencement de siège (2) en sorte que ladite partie avant (24, 124, 224) se déplace en dessous dudit siège (4) et au-dessus dudit montant de siège (8),
- engager ladite partie avant (24, 124, 224) sur ledit système de support (6) devant ledit montant de siège (8).
